# EUROPÄISCHE PATENTANMELDUNG

(11) **EP 2 845 527 A1**
(43) Veröffentlichungstag der Anmeldung: **11.03.2015**
(21) Anmeldenummer: 14181516.7
(22) Anmeldetag: 20.08.2014
(51) Int. Cl.: A47J 31/44, A47J 43/04, A47J 43/07

(54) **Vorrichtung zur Erzeugung eines Milchschaumes und Kaffeeautomat mit einer derartigen Vorrichtung**

(30) Priorität: 10.09.2013 DE 102013109864
(71) Anmelder: Miele & Cie. KG, 33332 Gütersloh (DE)
(72) Erfinder: Tembaak, Jutta, 49492 Westerkappeln (DE)

(57) **Zusammenfassung**

Die Erfindung betrifft eine Vorrichtung (1) zur Erzeugung eines Milchschaumes, mit einer mit kalter Milch befüllbaren Kammer (2), in der wenigstens ein in eine Rotation versetzbares Rührmittel (3) angeordnet ist, wobei erfindungsgemäß vorgeschlagen wird, dass das Rührmittel (3) mehrere, miteinander gekoppelte Quirle (4) aufweist.

Darüber hinaus wird ein Kaffeeautomat mit einer derartigen Vorrichtung zur Erzeugung eines Milchschaumes vorgestellt, dessen Kennzeichen darin besteht, dass die Vorrichtung (1) als eine Baueinheit ausgeführt und ein integraler Bestandteil des Kaffeeautomaten (15) oder lösbar mit dem Kaffeeautomaten (15) verbunden ist.

## Beschreibung

Die Erfindung betrifft eine Vorrichtung zur Erzeugung eines Milchschaumes und einen Kaffeeautomaten mit einer derartigen Vorrichtung.

Aus der EP 2 191 751 A1 geht eine entsprechende Vorrichtung zur Erzeugung eines Milchschaumes als Einzelgerät hervor, das eine mit kalter Milch befüllbare Kammer aufweist, in der wenigstens ein in eine Rotation versetzbares Rührmittel angeordnet ist. Die Kammer verfügt ferner über eine Heizeinrichtung, die sich in der Bodenplatte dieser Kammer befindet und durch Aufsetzen der Kammer auf einen elektrischen Kontakt aktiviert werden kann. Auf diese Weise wird die in die Kammer eingebrachte Milch erwärmt, so dass die Erzeugung des Milchschaumes in vereinfachter und verbesserter Weise möglich ist. Den oberen Abschluss der Kammer bildet ein Deckel, wobei gemäß dem Offenbarungsgehalt der Druckschrift das Rührmittel lösbar unterhalb des Deckels in die Kammer eingesetzt wird. Das Rührmittel besteht als Baueinheit aus einem Antrieb, einer Rotationsachse und einem einzelnen, am Ende der Rotationsachse befestigten Quirl, der eine wendelförmige Kontur aufweist.

Eine derartige Vorrichtung zur Erzeugung eines Milchschaumes ist jedoch wenig effektiv, weil lediglich ein einzelner Quirl vorhanden ist, der die gesamte, in die Kammer eingebrachte Milchmenge aufschäumen muss. Hieraus ergibt sich nicht nur ein hoher Energieaufwand, sondern auch eine verhältnismäßig lange Zeitdauer, bis der Milchschaum entsteht.

Eine ähnliche Ausführung wird in der EP 1 987 750 A2 beschrieben. Auch hier kommt lediglich ein einzelner Quirl am Ende einer Rotationsachse zum Einsatz, der die gesamte Menge der in eine Kammer eingefüllten Milch aufschäumen muss. Die Kammer ist insgesamt aus einem metallischem Werkstoff hergestellt und kann beispielsweise auf eine Herdplatte gestellt werden, um dadurch die darin enthaltenen Milch zu erwärmen. Ein Temperatursensor innerhalb der Kammer löst ein den Quirl aktivierendes Signal aus, wenn die darin enthaltene Milch eine definierte Temperatur erreicht hat.

Die in dieser Druckschrift beschriebene Lösung weist dieselben Nachteile auf, wie sie bereits im Zusammenhang mit der EP 2 191 751 A1 erwähnt wurden.

Schließlich beschreibt die EP 0 600 826 A1 eine Vorrichtung zur Erzeugung eines Milchschaumes, deren Aufbau jedoch sehr aufwändig ist. Zum Einsatz kommt hierbei ein Widerstandsdurchlasselement, das aus einer Vielzahl Lamellen besteht, die insgesamt einen Labyrinthdurchlass bilden, innerhalb dessen die erhitzte Milch aufgeschäumt werden kann. Die auf diese Weise aufgeschäumte Milch wird in einer sich in Strömungsrichtung anschließenden Schaumkammer gesammelt und nachfolgend über eine im Querschnitt reduzierte Austrittsöffnung abgegeben.

Nachteilig ist bei dieser Lösung insbesondere, dass die Milch vor Einbringung in die Vorrichtung zunächst erhitzt werden muss, wobei darüber hinaus der komplizierte Aufbau zu einem erhöhten Fertigungsaufwand und damit verbunden zu hohen Herstellungskosten führt.

Es ist darüber hinaus allgemein bekannt, beispielsweise in Kaffeeautomaten Wasserdampf zu erzeugen, um mit dessen Hilfe kalte Milch aufzuschäumen und dadurch einen Milchschaum zu erzeugen. Diese Maßnahme ist zwar sehr wirksam, jedoch relativ zeit- und energieaufwändig. Zudem besteht bei der Anwendung heißen Wasserdampfes die Gefahr von Verbrühungen für den Anwender. Zumeist wird nämlich der Wasserdampf über eine Düse des Kaffeeautomaten abgegeben, so dass diese Düse in einen Behälter gehalten werden muss, in dem sich Milch befindet. Ein weiterer Nachteil bei der Anwendung des Wasserdampfes zur Erzeugung von Milchschaum besteht in der Verdünnung der Milch, was insgesamt den Geschmack und die Qualität des Milchschaumes in negativer Weise beeinträchtigt.

Darüber hinaus konnte festgestellt werden, dass bei sämtlichen Vorrichtungen zur Erzeugung eines Milchschaumes relativ viel Zeit und Energie benötigt wird, um den Milchschaum in der gewünschten Qualität herzustellen. Die bislang bekannten Vorrichtungen sind ferner jeweils als Einzelgeräte im Einsatz, so dass bei der Herstellung eines Mischgetränkes zunächst der Milchschaum erzeugt werden muss, um ihn anschließend mit dem Getränk, also beispielsweise mit einem separat erzeugten Kaffee, zusammenzubringen. Daraus ergibt sich für den Nutzer ein erhöhter Arbeitsaufwand für die Zubereitung seines Getränkes.

Der Erfindung stellt sich somit das Problem, eine Vorrichtung zur Erzeugung eines Milchschaumes bereitzustellen, die in möglichst kurzer Zeit und auf Energie sparende Weise einen Milchschaum mit hoher Qualität erzeugt.
Zudem besteht ein Ziel der Erfindung darin, die Kombinierbarkeit einer derartigen Vorrichtung mit einem Kaffeeautomaten zu erreichen.

Erfindungsgemäß wird dieses Problem durch eine Vorrichtung zur Erzeugung eines Milchschaumes mit den Merkmalen des Patentanspruchs 1 sowie durch einen Kaffeeautomaten mit den Merkmalen des Patentanspruches 16 gelöst.

Vorteilhafte Ausgestaltungen und Weiterbildungen der Erfindung ergeben sich aus den jeweils nachfolgenden Unteransprüchen.

Dem entsprechend wurde eine Vorrichtung zur Erzeugung eines Milchschaumes, mit einer mit kalter Milch befüllbaren Kammer, in der wenigstens ein in eine Rotation versetzbares Rührmittel angeordnet ist, erfindungsgemäß dahingehend weitergebildet, dass das Rührmittel mehrere, miteinander gekoppelte Quirle aufweist.

Die Quirle stellen dabei sehr einfache Bauelemente dar, so dass insgesamt eine fertigungstechnisch einfache und damit kostengünstige Möglichkeit geschaffen wurde, mit wenig Energieaufwand einen Milchschaum zu erzeugen, der qualitativ sehr hochwertig ist. Durch die Anwendung einer Vielzahl einzelner Quirle werden zudem die Milchmoleküle zerkleinert, so dass insgesamt eine verbesserte Homogenisierung eintritt und der Milchschaum verglichen mit bekannten Lösungen eine wesentlich feinere Konsistenz aufweist.

Gemäß einer ersten Ausgestaltung der Erfindung wird vorgeschlagen, dass die Quirle auf einer gemeinsamen Rotationsachse angeordnet sind. Eine derartige Lösung ist von Vorteil, weil sie nicht nur baulich einfach gestaltet ist, sondern darüber hinaus eine aufwändige Mechanik zur Kopplung der einzelnen Quirle entfallen kann.

Eine wesentliche Verbesserung der Qualität des Milchschaumes, die mit einer Verkürzung der Betriebszeit der Vorrichtung einhergeht, kann zudem dadurch erreicht werden, dass die Quirle beabstandet zueinander auf der gemeinsamen Rotationsachse angeordnet sind. Durch die Abstände zwischen den einzelnen Quirlen bilden sich in diesen Bereichen turbulente Strömungen aus, die eine zusätzliche Verwirbelung und damit Verbesserung des Aufschäumens der Milch bewirken.

Eine andere, erfindungsgemäße Weiterbildung einer Vorrichtung zur Erzeugung eines Mischraumes besteht darin, dass zahnradartig miteinander gekoppelten Quirle auf zueinander parallelen Rotationsachsen in der Kammer angeordnet sind. Die einzelnen Quirle werden dabei wie ein Getriebe miteinander verbunden, so dass ein einzelner Antrieb ausreicht, um die Bewegungsenergie auf sämtliche Quirle zu übertragen. Auf diese Weise kann die Anzahl der in der Vorrichtung vorhandenen Bauteile auf ein Minimum beschränkt werden. Eine derartige Ausführung einer Vorrichtung zur Erzeugung von Milchschaum ist darüber hinaus von Vorteil, weil die Quirle aus kostengünstigen, lebensmittelneutralen und langlebigen Werkstoffen, wie Kunststoffen, hergestellt werden können.

Zur Reduzierung der Baugröße der erfindungsgemäßen Vorrichtung zur Erzeugung eines Mischraumes ist es möglich, einen mit kalter Milch befüllbaren, über eine strömungsleitende Verbindung mit der Kammer verbundener Behälter einzusetzen. Die Reduzierung der Baugröße ergibt sich dabei daraus, dass der Behälter außerhalb und unabhängig von der Vorrichtung aufgestellt werden kann. Die Verbindung zwischen Behälter und Kammer besteht dabei aus einer Strömungsleitung und dient der Zuführung der Milch in die Kammer.

Um die Förderung der Milch aus dem Behälter in die Kammer zuverlässig zu gewährleisten, ist es entsprechend einem weiteren Vorschlag nach der Erfindung von Vorteil, wenn zwischen Behälter und Kammer wenigstens eine Pumpe in die Strömungsleitung integriert ist. Die Pumpe ermöglicht ferner eine Drucksteigerung innerhalb der Strömungsleitung, so dass die auf diese Weise geförderte Milch bereits mit einer kinetischen Energie beaufschlagt ist, wenn sie in die Kammer eintritt.

Eine ganz wesentliche Vereinfachung der Handhabung der gesamten Vorrichtung zur Erzeugung eines Milchschaumes ergibt sich, wenn der Behälter lösbar mit der Vorrichtung verbunden ist. Auf diese Weise kann der Behälter im Bedarfsfall aus der Vorrichtung entnommen werden, um ihn beispielsweise mit frischer Milch zu befüllen. Darüber hinaus wird jedoch durch diese Maßnahme auch die Möglichkeit der Reinigung des Behälters wesentlich vereinfacht. Sinnvollerweise sollte beim Einsetzen des Behälters in die Vorrichtung beispielsweise eine Kupplung zwischen der Strömungsleitung und einem korrespondierenden Ventil erfolgen, wobei das bei entnommenem Behälter geschlossene Ventil beim Einsetzen des Behälters in die Vorrichtung geöffnet wird.

Die Erzeugung von Milchschaum aus kalter Milch ist grundsätzlich möglich. Die Erwärmung der Milch steigert jedoch die Effektivität und verkürzt damit die Zeit zur Herstellung des Getränkes, insbesondere eines heißen Milchmischgetränkes, wie Milchkaffee oder Cappuchino. Aus diesem Grund stellt es einen wesentlichen Vorteil der Erfindung dar, wenn die Kammer eine Heizeinrichtung aufweist.

Eine besonders einfache Ausführungsvariante einer derartigen Heizeinrichtung besteht darin, dass die Heizeinrichtung aus mindestens einem in den Innenraum der Kammer beziehungsweise in die Kammerwand integrierten oder um die Kammerwand gewickelten Heizdraht besteht.

Die Heizeinrichtung erlaubt eine manuelle oder elektronisch gesteuerte Regelung zur Einstellung einer beliebigen Temperatur der zu erhitzenden Milch. Auf diese Weise kann verhindert werden, dass die Milch entweder eine zu geringe Temperatur aufweist oder anbrennt.

Als Antrieb des Rührmittels ist erfindungsgemäß ein Motor verwendbar, insbesondere kann hierzu ein Schrittmotor dienen. Als vorteilhaft hat sich in jedem Fall ein Elektromotor herausgestellt, weil dessen Ansteuerung auf einfache Weise möglich ist. Mit Hilfe des Schrittmotors kann eine intervallartige Beschleunigung der auf ihrer Rotationsachse angeordneten Quirle erfolgen, was eine zusätzliche Verbesserung und Beschleunigung der Milchschaumerzeugung bewirkt.

Natürlich muss der innerhalb der Kammer erzeugte Milchschaum auch abgeführt beziehungsweise entnommen werden können, um ihn beispielsweise für ein Getränk zu verwenden. Hierzu weist die Kammer einen Auslauf zur Entnahme des erzeugten Milchschaumes auf.

Ein besonderer Vorteil besteht darin, dass der Auslauf ebenfalls von der Heizeinrichtung temperiert ist und/oder zumindest einen sich in Strömungsrichtung verjüngenden Abschnitt aufweist. Die Temperierung des Auslaufes verhindert eine Abkühlung des erzeugten Milchschaumes, was wiederum den Vorteil mit sich bringt, dass auch das mit dem Milchschaum zusammengebrachte Getränk nicht unnötig Temperatur verliert, sich also nicht wesentlich abkühlt. Die Querschnittsreduzierung des Auslaufs führt hingegen zu einer Drucksteigerung, was insgesamt die Entleerung der Kammer verbessert.

Um die Temperierung des Milchschaumes bis zur endgültigen Abgabe aus der Vorrichtung zu ermöglichen, ist es sinnvoll, wenn der beheizte Auslauf eine Isolierung aufweist. Die Isolierung kann mit an sich bekannten Mitteln erfolgen, also beispielsweise aus einem Kunststoffmantel bestehen.

Ein wesentlicher Vorzug der erfindungsgemäßen Vorrichtung zur Erzeugung von Milchschaum besteht auch darin, dass die Vorrichtung zu Reinigungszwecken zumindest teilweise zerlegbar ausgeführt ist. Dabei ist insbesondere daran gedacht, dass eine trennbare Kupplung zwischen dem Antrieb und der Rotationsachse gegeben ist, was zur Folge hat, dass die gesamte Rotationsachse mit den darauf angeordneten Quirlen aus der Vorrichtung entnommen werden kann. Darüber hinaus besteht die Möglichkeit, die Kammer als separates Einzelteil zu fertigen, so dass diese ebenfalls als Ganzes von der Vorrichtung trennbar ist. Weiterhin kann es sinnvoll sein, wenn sich zusätzlich die einzelnen Quirle von der Rotationsachse abtrennen lassen. Die zerlegten Einzelteile sollten insgesamt spülmaschinenfest ausgelegt werden, um eine einfache und effektive Reinigung in einem Geschirrspülautomaten zu ermöglichen.

Ein erfindungsgemäßer Kaffeeautomat mit einer Vorrichtung zur Erzeugung eines Milchschaumes ist dadurch gekennzeichnet, dass die Vorrichtung als eine Baueinheit ausgeführt und ein integraler Bestandteil des Kaffeeautomaten oder lösbar mit dem Kaffeeautomaten verbunden ist.

Da Milchschaum nicht regelmäßig benötigt wird, kann es einen Vorteil darstellen, wenn die Vorrichtung von dem Kaffeeautomaten abtrennbar ist. Somit wird sie nur im Bedarfsfall mit dem Kaffeeautomaten verbunden und anschließend wieder entfernt. Dadurch kann der Kaffeeautomat kompakt ausgeführt und seine Baugröße reduziert werden. Bei einer integrierten Lösung bildet die Vorrichtung zur Erzeugung eines Milchschaumes einen Bestandteil des Kaffeeautomaten und ist folglich untrennbar mit diesem verbunden.

Entsprechend einem weiterführenden Vorschlag nach der Erfindung wird davon ausgegangen, dass der Kaffeeautomat eine Aufnahmeeinrichtung zur lösbaren Befestigung des Behälters aufweist. Auf diese Weise kann zumindest der Behälter lösbar mit dem Kaffeeautomaten verbunden sein, was die zuvor bereits beschriebenen Vorteile mit sich bringt.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen Kaffeeautomaten mit einer Vorrichtung zur Erzeugung eines Milchschaumes,
- Figur 2:: eine schematisch stark vereinfachte Darstellung des Funktionsprinzips einer Vorrichtung zur Erzeugung eines Milchschaumes,
- Figur 3:: eine Rotationsachse mit mehreren darauf angeordneten Quirlen, als separiertes Einzelteil
und
- Figur 4:: ein Beispiel für die Anordnung mehrerer Quirle auf zueinander parallelen Rotationsachsen.

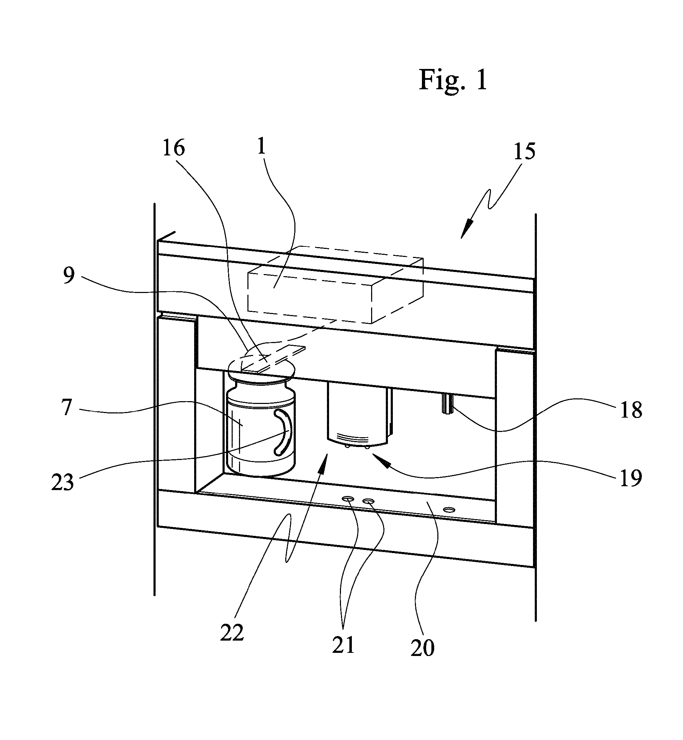

Die Figur 1 veranschaulicht einen Kaffeeautomaten 15, der als ein Einbaugerät in einen Küchenschrank integriert ist. Die nur andeutungsweise dargestellte Vorrichtung 1 zur Erzeugung eines Milchschaumes ist über eine Strömungsleitung 9 mit einem Behälter 7 verbunden. In dem Behälter 7 befindet sich zunächst kalte Milch, die innerhalb der Vorrichtung 1 erwärmt werden kann. Zur Vereinfachung der Handhabung des Behälters 7 weist dieser einen Griff 23 auf. Bei dem dargestellten Beispiel eines Kaffeeautomaten 15 ist der Behälter 7 in eine Vertiefung 22 eingehängt, wozu sowohl der Behälter 7 an seinem Deckel, als auch der Kaffeeautomat 15 jeweils eine korrespondierende Aufnahmeeinrichtung 16 aufweisen. Im einfachsten Fall handelt es sich hierbei um eine Führung, also beispielsweise eine Schwalbenschwanzführung. Die Vertiefung 22 des Kaffeeautomaten 15 weist jedoch weitere Funktionen auf. So wird der Boden der Vertiefung 22 durch ein Abtropfblech 20 gebildet, das mehrere Öffnungen 21 aufweist, die zur Abführung überschüssiger Flüssigkeitsreste in eine unterhalb des Abtropfbleches 20 angeordnete, jedoch aus der Figur 1 nicht ersichtliche Abtropfschale dienen. Auf dem Abtropfblech 20 kann ein Trinkgefäß abgestellt werden, das mit einem Getränk aus dem Kaffeeautomaten befüllt werden soll. Hierzu wird das Trinkgefäßes unmittelbar unter einem der Entnahmeeinrichtungen 18 oder 19 gestellt und anschließend mit dem aus der entsprechenden Entnahmeeinrichtung 18,19 abgegebenen Getränk oder Getränkebestandteil befüllt. So kann im vorliegenden Beispiel die Entnahmeeinrichtung 18 zur Abgabe von heißem Wasser genutzt werden, während die Entnahmeeinrichtung 19 zur Abgabe von Kaffee dient.

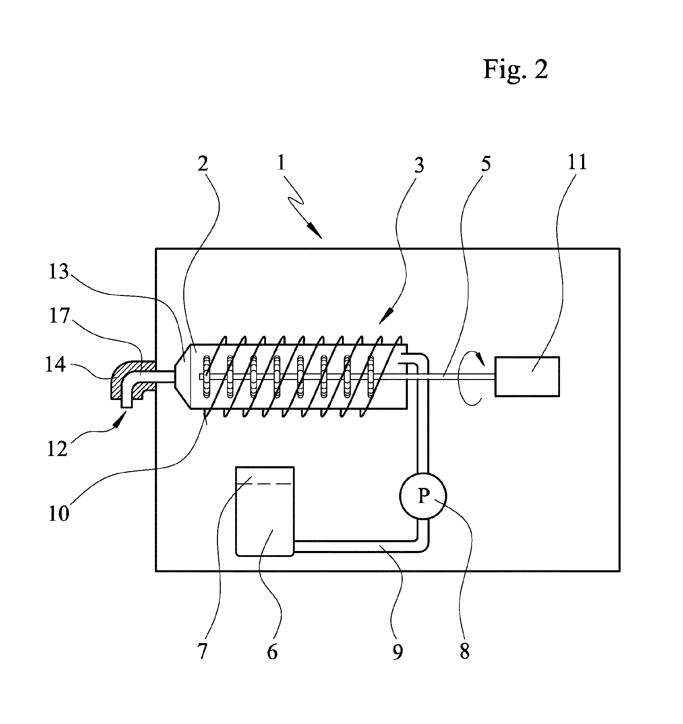

Ein Ausführungsbeispiel einer erfindungsgemäßen Vorrichtung 1 zur Erzeugung von Milchschaum geht aus der Darstellung in Figur 2 hervor. Der wesentliche Bestandteil dieser Vorrichtung 1 ist eine Kammer 2, die im vorliegenden Fall eine hohlzylindrische Gestalt aufweist und beispielsweise aus Edelstahl gefertigt wird. In der Kammer 2 ist eine Rotationsachse 5 drehbar gelagert, die außerhalb der Kammer 2 mit einem Antrieb in Form eines Schrittmotors gekoppelt ist. Innerhalb der Kammer 2 verfügt die Rotationsachse 5 über eine Vielzahl, mit einem Abstand zueinander angeordneter Quirle 4. Die Kammer 2 ist darüber hinaus an ihrer Außenmantelfläche mit einer Heizeinrichtung versehen, die bei dem dargestellten Beispiel aus einem um die Kammerwand gewickelten Heizdraht 10 besteht. Die Rotationsachse 5 mit den darauf angeordneten Quirlen 4 bildet insgesamt eine Rühreinrichtung 3. Darüber hinaus verfügt die in Figur 1 gezeigte Vorrichtung 1 zur Erzeugung von Milchschaum über einen Behälter 7, der mit kalter Milch 6 befüllt ist. Über eine strömungsleitende Verbindung, die im vorliegenden Fall aus einer Strömungsleitung 9 besteht und die eine integrierte Pumpe 8 aufweist, ist der Behälter 7 mit der Kammer 2 verbunden. Auf diese Weise kann kalte Milch 6 aus dem Behälter 7 in die Kammer 2 gefördert werden. Mit Hilfe der Heizeinrichtung 10 erfolgt anschließend eine Erwärmung der Milch innerhalb der Kammer 2, wobei gleichzeitig oder in Abhängigkeit der sich einstellenden Temperatur der Antrieb 11 aktiviert und damit das Rührmittel 3 in eine Rotationsbewegung versetzt wird. Durch die wendelförmig gestalteten Quirle 4 entsteht aus der in der Kammer 2 vorhandenen Milch Milchschaum, der über einen Auslauf 12 abgeführt werden kann. Der Auslauf 12 verfügt über einen sich verjüngenden Abschnitt 13, so dass auf diese Weise eine Beschleunigung des aus der Kammer abgeführten Milchschaumes erreicht wird. Im Anschluss an den sich verjüngenden Abschnitt 13 des Auslaufes 12 besteht der Auslauf 12 aus einem Auslaufohr 17, das mit einer Isolierung 14 versehen ist. Die Isolierung 14 verhindert einen Wärmeverlust des Milchschaumes.

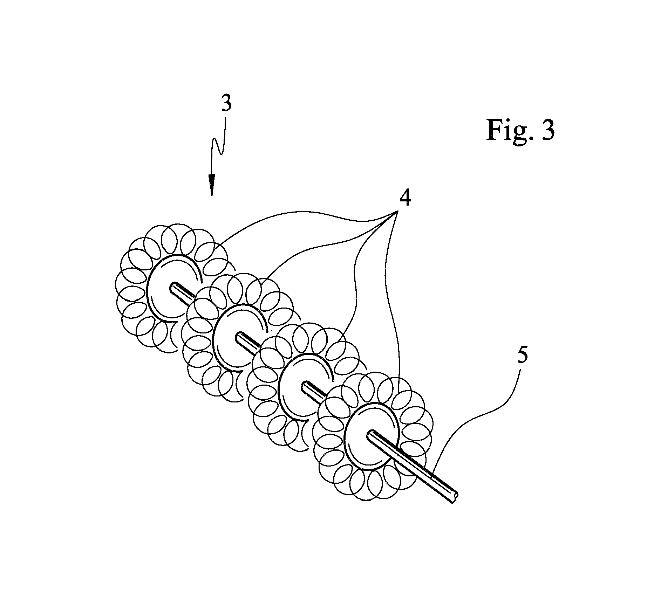

Die Figur 3 zeigt als separates Einzelteil ein Rührmittel 3, das eine Rotationsachse 5 aufweist. Auf der Rotationsachse 5 sind mit einem geringen Abstand zueinander mehrere wendelförmig ausgeführte Quirle 4 angeordnet, die im vorliegenden Fall aus einem Metalldraht hergestellt sind. Dabei führen die Abstände zwischen den einzelnen Quirlen 4 dazu, dass sich zwischen den Quirlen 4 eine turbulente Strömung ausbildet, die zusätzlich zu einer Verbesserung des erzeugten Milchschaumes führt, was sich letztlich in einer feinen Konsistenz und optimalen Homogenisierung des Milchschaumes ausdrückt.

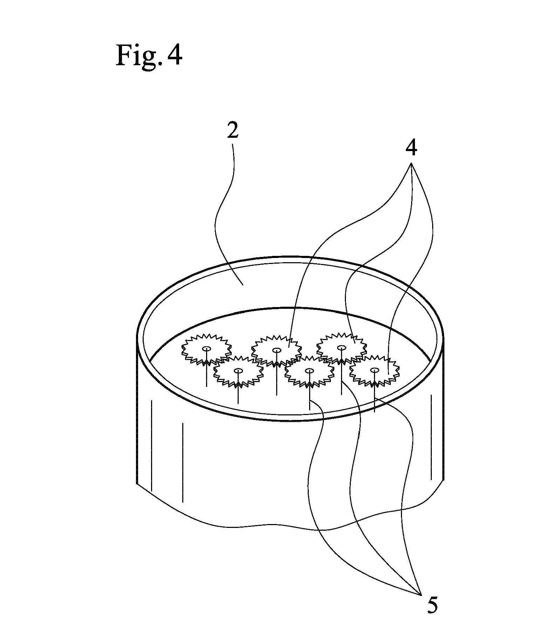

Aus der Figur 4 geht schließlich eine weitere Ausführungsvariante einer Kammer 2 hervor. Innerhalb dieser Kammer 2 sind mehrere, zahnradartig ausgeführte und miteinander gekoppelte Quirle 4 angeordnet. Diese Quirle 4 rotieren um zueinander parallel ausgerichtete Rotationsachsen 5. Bei dieser Lösung ist es ausreichend, lediglich eine Rotationsachse 5 durch den vorhandenen Antrieb 11 anzutreiben. Die Bewegungsübertragung auf die übrigen Quirle 4 erfolgt durch die zahnradartige Gestaltung ihrer Außenflächen und die damit einhergehende Kopplung der Quirle 4.

### BEZUGSZEICHENLISTE:

- 1: Vorrichtung
- 2: Kammer
- 3: Rührmittel
- 4: Quirl
- 5: Rotationsachse
- 6: Milch
- 7: Behälter
- 8: Pumpe
- 9: Strömungsleitung
- 10: Heizdraht
- 11: Antrieb / Motor
- 12: Auslauf
- 13: Verjüngter Abschnitt
- 14: Isolierung
- 15: Kaffeeautomat
- 16: Aufnahmeeinrichtung
- 17: Auslaufrohr
- 18: Entnahmeeinrichtung (heißes Wasser)
- 19: Entnahmeeinrichtungen (Kaffee und Kaffeemischgetränke)
- 20: Abtropfblech
- 21: Öffnungen
- 22: Vertiefung
- 23: Griff

## Patentansprüche

1. Vorrichtung (1) zur Erzeugung eines Milchschaumes, mit einer mit kalter Milch befüllbaren Kammer (2), in der wenigstens ein in eine Rotation versetzbares Rührmittel (3) angeordnet ist,
**dadurch gekennzeichnet, dass**
das Rührmittel (3) mehrere, miteinander gekoppelte Quirle (4) aufweist.

2. Vorrichtung nach Anspruch 1,
**dadurch gekennzeichnet, dass**
die Quirle (4) auf einer gemeinsamen Rotationsachse (5) angeordnet sind.

3. Vorrichtung nach Anspruch 1 oder 2,
**dadurch gekennzeichnet, dass**
die Quirle (4) beabstandet zueinander auf der Rotationsachse (5) angeordnet sind.

4. Vorrichtung nach Anspruch 1,
**dadurch gekennzeichnet, dass**
die zahnradartig miteinander gekoppelten Quirle (4) auf zueinander parallelen Rotationsachsen (5) in der Kammer (2) angeordnet sind.

5. Vorrichtung nach einem der vorstehend genannten Ansprüche,
**dadurch gekennzeichnet, dass**
ein mit kalter Milch (6) befüllbarer, über eine strömungsleitende Verbindung mit der Kammer (2) verbundener Behälter (7) vorhanden ist.

6. Vorrichtung nach Anspruch 5,
**dadurch gekennzeichnet, dass**
zwischen Behälter (7) und Kammer (2) wenigstens eine Pumpe (8) in die Strömungsleitung (9) integriert ist.

7. Vorrichtung nach Anspruch 5 oder 6,
**dadurch gekennzeichnet, dass**
der Behälter (7) lösbar mit der Vorrichtung (1) zur Erzeugung eines Milchschaumes verbunden ist.

8. Vorrichtung nach einem der vorstehend genannten Ansprüche,
**dadurch gekennzeichnet, dass**
die Kammer (2) eine Heizeinrichtung aufweist.

9. Vorrichtung nach Anspruch 8,
**dadurch gekennzeichnet, dass**
die Heizeinrichtung aus mindestens einem in den Innenraum der Kammer (2) beziehungsweise in die Kammerwand integrierten oder um die Kammerwand gewickelten Heizdraht (10) besteht.

10. Vorrichtung nach Anspruch 8 oder 9,
**dadurch gekennzeichnet, dass**
die Heizeinrichtung eine manuelle oder elektronisch gesteuerte Regelung zur Einstellung einer Temperatur der zu erhitzenden Milch (6) aufweist.

11. Vorrichtung nach einem der vorstehend genannten Ansprüche,
**dadurch gekennzeichnet, dass**
der Antrieb des Rührmittels (3) ein Motor (11), insbesondere ein Schrittmotor ist.

12. Vorrichtung nach einem der vorstehend genannten Ansprüche,
**dadurch gekennzeichnet, dass**
die Kammer (2) einen Auslauf (12) zur Entnahme des erzeugten Milchschaumes aufweist.

13. Vorrichtung nach Anspruch 12,
**dadurch gekennzeichnet, dass**
der Auslauf (12) ebenfalls von der Heizeinrichtung temperiert ist und/oder zumindest einen sich in Strömungsrichtung verjüngenden Abschnitt (13) aufweist.

14. Vorrichtung nach Anspruch 13,
**dadurch gekennzeichnet, dass**
der beheizte Auslauf (12) eine Isolierung (14) aufweist.

15. Vorrichtung nach einem der vorstehend genannten Ansprüche,
**dadurch gekennzeichnet, dass**
die Vorrichtung (1) zu Reinigungszwecken zumindest teilweise zerlegbar ausgeführt ist.

16. Kaffeeautomat mit einer Vorrichtung zur Erzeugung eines Milchschaumes nach einem der vorstehend genannten Ansprüche,
**dadurch gekennzeichnet, dass**
die Vorrichtung (1) als eine Baueinheit ausgeführt und ein integraler Bestandteil des Kaffeeautomaten (15) oder lösbar mit dem Kaffeeautomaten (15) verbunden ist.

17. Kaffeeautomat nach Anspruch 16,
**dadurch gekennzeichnet, dass**
der Kaffeeautomat (15) eine Aufnahmeeinrichtung (16) zur lösbaren Befestigung des Behälters (7) aufweist.
